# EUROPEAN PATENT SPECIFICATION

(11) **EP 4 216 401 B1**
(45) Date of publication and mention of the grant of the patent: **18.11.2026**
(21) Application number: 23152309.3
(22) Date of filing: 18.01.2023
(51) Int. Cl.: H02K 3/28, H02K 15/04, H02K 15/06

(54) **A METHOD OF MANUFACTURING A STATOR FOR A SLOTLESS ELECTRIC MOTOR**
VERFAHREN ZUR HERSTELLUNG EINES STATORS FÜR EINEN ELEKTROMOTOR OHNE NUTEN
PROCÉDÉ DE FABRICATION D'UN STATOR POUR MOTEUR ÉLECTRIQUE SANS ENCOCHES

(30) Priority: 19.01.2022 GB 202200661
(43) Date of publication of application: 26.07.2023
(60) Divisional application: 23198664.7 / 4 274 068; 26183446.9 / 4 779 850
(73) Proprietor: ETA Green Power Limited, Hethel NR14 8FB (GB)
(72) Inventor: COLLINGS, Henry, Hethel, NR14 8FB (GB); BOWMAN, Liam, Hethel, NR14 8FB (GB)
(74) Representative: White, Andrew John

(56) References cited:
- EP-A1- 2 469 690
- EP-A2- 1 294 076
- US-A- 4 401 907
- US-A1- 2018 115 209
- US-A1- 2020 313 526

## Description

### Field of invention

The present invention is directed to slotless electric motor, in particular, to a method of manufacturing a stator for a slotless electric motor.

### Background

A motor is an electromagnetic device that converts electric energy into kinetic energy. The motor comprises two parts: a stator; and a rotor. Slotless motors are a type of motor which are known in the art.

Disadvantageously, prior art methods of manufacturing slotless motors are time consuming and or costly.

Disadvantageously, some typical prior art methods of manufacturing stators for slotless motors require a secondary process to join all of the individual conductor coils together after shaping of the conductor coils. That is, a primary method of forming a conductor into a given shape (e.g. into a given geometry) is performed a plurality of times for a plurality of conductor coils. Once the primary method has been performed a given number of times (e.g. N times) the individual conductor coils (e.g. the N individual conductor coils) are joined together (e.g. via N-1 connections) to provide a stator for a slotless motor.

Disadvantageously, some typical prior art methods of manufacturing stators for slotless motors form stators from a single conductor (e.g. thereby omitting the N-1 connections described in the paragraph above) comprise compressing the conductor into a given shape (e.g. into a given geometry) to form a plurality of loops which may result in a stator with disorganised (e.g. crossing and/or non-parallel) conductor lengths which form the loops. The disorganisation of the conductor loops result from circulating losses in the windings.

US4401907A describes an electric motor coil element and a method of manufacturing the same. EP1294076A2 describes an alternator, and in particular, a stator for an alternator mounted to an automobile. US2018/115209A1 describes a permanent magnet synchronous motor and assembly method thereof. US2020/313526 describes a process for assembly of a brushless air core motor-generator that includes assembling a rotor formed from two spaced apart rotor portions having magnetic poles that drive magnetic flux circumferentially through the rotor portions and back and forth across an armature airgap between the rotor portions. EP 2469690 describes a method for manufacturing a cylindrical winding for slotless electrical machine.

### Summary

The invention is set out in the independent claim and optional features are set out in the dependent claims. Aspects of the disclosure may be provided in conjunction with each other, and features of one aspect may be applied to other aspects.

The invention provides a method of manufacturing a stator for a slotless electric motor, the method comprising: disposing a conductor in the shape of an annular cylinder; bonding a plurality of bonded lengths on the conductor wherein the bonded lengths comprise regions of the conductor wherein adjacent wires are bonded along the bonded lengths and wherein the average spacing between adjacent wires is smaller in the bonded lengths than in non-bonded lengths, wherein the plurality of bonded lengths are separated by non-bonded lengths; folding the conductor to provide a plurality of petals repeated along the conductor, wherein each petal comprises a pair of bonded lengths connected by a non-bonded length, wherein the pair of bonded lengths are disposed parallel to each other, and wherein: adjacent petals on the conductor are connected by a non-bonded length; and, the non-bonded lengths in the petals are bounded by a circumference of a first circle, wherein the first circle has a first diameter; the non-bonded lengths which connect the petals are bounded by a circumference of a second circle, wherein the second circle has a second diameter, wherein the second diameter is less than the first diameter, and wherein the first circle and second circle are coplanar and concentric; rotating each petal about a point on the second circle to align in parallel the bonded lengths of all of the petals to thereby provide a stator comprising a cylindrically-shaped conductor having a diameter equal to the second diameter and wherein the bonded lengths are equidistantly disposed around and from a central longitudinal axis of the cylindrically-shaped conductor.

Advantageously, a method of manufacturing a stator for a slotless motor is provided which is less time consuming than prior art manufacturing methods.

The conductor may form at least part of the stator for a motor.

In examples, the method of manufacturing a stator may comprise a step of providing a wave winding. Advantageously, wave windings provide stators with comparatively large conductor volumes with a comparably fewer number of soldering/welding processes to provide the conductor. Advantageously, wave windings provide stators with a reduced circulating/eddy losses.

In examples, the annular cylinder (also referred to as the cylinder) may have an inner radial face and an outer radial face and first axial face and a second axial face and a central longitudinal axis.

In examples, the conductor comprises a bundle of wires. Each wire may be disposed parallel to neighbouring wires (e.g. there are no twists or knots formed between the wires).

In examples wherein the conductor is wound around the central longitudinal axis in the manner of a helix, each of the wires of the conductor has a constant distance from the inner radial face.

In examples wherein the conductor is wound around the central longitudinal axis in the manner of a spiral, each of the wires of the conductor has a constant distance from the first axial face.

The step of bonding a plurality of bonded lengths on the conductor may comprise applying a bonding compound (e.g. an adhesive such as a resin or a wax) to lengths of the conductor to thereby form a plurality of bonded lengths, for example, wherein the step of bonding a plurality of bonded lengths on the conductor further comprises activating the bonding compound (e.g. making the resin or wax set into a solid).

In examples wherein the bonding compound is a wax, the wax may be melted and then applied to the lengths of the conductor. The lengths with the wax applied may be compressed whilst the wax is permitted to cool until it solidifies. In this context 'activating' the wax may comprise cooling the wax so that it solidifies.

In examples, the bonding compound is a wax such as a moulding wax. The moulding wave is applied to the lengths of the conductor which are compressed and subsequently baked during a potting process (i.e. thereby 'activating' the wax).

Advantageously, a simple means of providing a plurality of bonded lengths may be provided e.g. there may be no need for welding etc. Advantageously, the time required to manufacture/assemble e.g. a conductor for each electrical phase may be formed into a cylindrical shape using the manufacturing method a single time rather than performing a method of forming individual conductors into a specific shape multiple times and then joining (e.g. welding) these individual conductors together.

The method may comprise: applying a half-twist to one of the non-bonded lengths of the conductor at a first point on the conductor so that a cross-section of the wire at the first point of the conductor is a mirror-image of a cross-section of the wire at a second point of the conductor, such that, a wire on the inner radial face at the first point is on the outer radial face at the second point.

Advantageously, Joule heating of the conductor can be distributed between a first portion of the conductor on a first side of the half-twist and a second portion of the conductor on a second side of the half-twist. Therefore, wear associated with said heating may be distributed between the two sides thereby extending the lifetime of the conductor.

The method may comprise: disposing the cylindrically-shaped conductor within a central hole of a flux ring having an inner diameter which is greater than the second diameter to thereby provide a stator comprising a cylindrically-shaped conductor with a flux ring disposed around an outer radial surface of the conductor.

The flux ring may have an axial length which is at least the length of the bonded lengths of the conductor. Advantageously, the power transfer from the stator to the rotor may be increased compared to if a shorter flux ring is used.

The method may comprise: disposing an expandable mandrel in the centre of the cylindrically-shaped conductor; and, expanding the expandable mandrel when the cylindrically-shaped conductor is disposed within the central hole of the flux ring to thereby increase the diameter of the cylindrically-shaped conductor to a diameter between the second diameter and the inner diameter of the flux ring.

In examples, a plurality of the folded conductors (e.g. conductors formed by the step of folding the conductor to provide a plurality of petals repeated along the conductor - set out in detail above) are stacked atop one another (e.g. so that the first circles and second circles of each conductor are disposed atop each other and each of the petals are aligned).

Subsequent method steps are performed on the plurality of conductors as a whole.

Advantageously, the radial distance between the conductor and the flux ring may be reduced thereby comparatively increasing power transfer between the conductor (e.g. stator) and a rotor. In examples wherein a plurality of the folded conductors are stacked atop one another, the folded conductors are stacked to a selected preferable stack height. The stack height is the axial extent of the stacked conductors. At the preferable stack height an improved copper density is provided which permits high current flow therethrough with comparatively low power losses. Providing a stack of folded conductors close to or at a preferable stack height the radial distance between the conductor and flux ring is reduced.

The method may comprise: bending a first axial end of the cylindrically-shaped conductor to toward the longitudinal axis.

The first axial end may be disposed in contact with a heat sink to thereby aid in heat transfer away from the stator. In examples, the second axial end may be disposed in contact with a heat sink.

Advantageously, the mean axial distance between the flux ring and the first axial end of the conductor may be reduced thereby increasing power transfer between the stator and rotor. Power losses (I²R) are reduced which leads to a lower temperature rise in the conductor when a current is flowed therethrough. Reducing the temperature rise in the conductor permits a greater torque to be applied to the motor (and higher motor speeds obtained).

The method may comprise: bending a second axial end of the cylindrically-shaped conductor away from the longitudinal axis.

Providing at least one of the axial ends away from the longitudinal axis (in this example, the second axial end) a rotor may be inserted into the stator i.e. the rotor may be disposed between an inner radial surface formed by the cylindrically-shaped conductor.

An aspect of the disclosure provides a method of manufacturing stator for a slotless electric motor, the method comprising: disposing a conductor in a penannular shape within the bounds of an annular cylinder bonding a plurality of bonded lengths on the conductor wherein the bonded lengths comprise regions of the conductor wherein the wires in the region have been bonded together, wherein the plurality of bonded lengths are separated by non-bonded lengths; applying a half-twist to one of the non-bonded lengths of the conductor at a first point on the conductor so that a cross-section of the wire at the first point of the conductor is a mirror-image of a cross-section of the wire at a second point of the conductor, such that, a wire on the inner radial face at the first point is on the outer radial face at the second point.

Advantageously, a method of manufacturing a stator for a slotless motor is provided which is less time consuming than prior art manufacturing methods.

In examples, the annular cylinder (also referred to as the cylinder) may have an inner radial face and an outer radial face and first axial face and a second axial face and a central longitudinal axis.

In examples, the conductor comprises a bundle of wires. Each wire may be disposed parallel to neighbouring wires (e.g. there are no twists or knots formed between the wires).

In examples wherein the conductor is wound around the central longitudinal axis in the manner of a helix, each of the wires of the conductor has a constant distance from the inner radial face.

In examples wherein the conductor is wound around the central longitudinal axis in the manner of a spiral, each of the wires of the conductor has a constant distance from the first axial face.

An aspect of the disclosure provides a stator for a slotless electric motor obtainable by any of the methods described herein.

Advantageously, a stator for a slotless motor is provided which is less time consuming to manufacture than slotless motors manufactured by prior art methods.

An aspect of the disclosure provides a method of manufacturing a slotless electric motor, the method comprising: performing any of the methods of manufacturing a stator described herein to thereby provide a stator; and providing a rotor configured to rotate around an axial centre of the stator.

Advantageously, a method of manufacturing a stator for a slotless motor is provided which is less time consuming than prior art manufacturing methods.

An aspect of the disclosure provides a stator for a slotless electric motor, the stator comprising: a conductor comprising a bundle of wires wherein each wire is disposed parallel to the other wires wherein the conductor comprises a plurality of bonded lengths wherein the bonded lengths comprise regions of the conductor wherein adjacent wires are bonded along the bonded lengths and wherein the average spacing between adjacent wires is smaller in the bonded lengths than in non-bonded lengths, wherein the non-bonded lengths separate the plurality of bonded lengths.

The bonded lengths may be referred to as chocolate blocks or choc blocks. Advantageously, the bonded lengths provide regions of increased conductor density in comparison to the conductor density in unbonded lengths. Correspondingly, the bonded regions may permit comparatively higher current density to pass therethrough which may generate magnetic fields of increased strength (e.g closer field lines) around the bonded lengths when compared to unbonded lengths. In examples, wherein the conductor is copper, the bonded lengths provide regions of increased copper density, also known as copper fill or copper fill density.

The bonded lengths have a greater stiffness (e.g. rigidity) in comparison to the unbonded lengths. That is, the bonded lengths deform to a lesser extent than unbonded lengths when forces of equal magnitude are applied to both the bonded length and the unbonded lengths. The bonded lengths may support the structure of the stator (e.g. the stator is self-supporting because of the bonded lengths) given the relative stiffness of the bonded lengths.

The conductor may be disposed in a cylindrical shape, wherein: the bonded lengths of the conductor are arranged parallel to each other and are disposed on the circumference of a circle; and, the bonded lengths are equidistantly disposed around and from a central longitudinal axis of the cylindrically-shaped conductor.

### Drawings

Embodiments of the disclosure will now be described, by way of example only, with reference to the accompanying drawings, in which:
Figure 1 illustrates a plan view of a conductor;
Figure 2A illustrates an axial plan view of a conductor;
Figure 2B illustrates a partial axial plan view of a portion of the conductor of Figure 2A;
Figure 3A illustrates an axial plan view of a plan of the conductor of Figures 2A and 2B comprising a plurality of bonded and non-bonded lengths;
Figure 3B illustrates an axial plan view of layers of the conductor in a non-bonded length;
Figure 3C illustrates an axial plan view of layers of the conductor in a bonded length;
Figures 4A and 4B illustrate the conductor shown in Figures 3A, 3B, and 3C folded to provide a plurality of petals;
Figures 5A and 5B illustrate another conductor similar to the first conductor shown in Figures 3A, 3B, and 3C folded to provide a plurality of petals;
Figures 6A and 6B illustrate another conductor similar to the first conductor shown in Figures 3A, 3B, and 3C folded to provide a plurality of petals;
Figure 7A illustrates an axial perspective view of a first folded conductor, a second folded conductor and a third folded conductor axially stacked one atop the other to provide a folded conductor stack;
Figure 7B illustrates a radial perspective view of the folded conductor stack shown in Figure 7A;
Figure 8A illustrates a bonded length in a first portion of a conductor;
Figure 8B illustrates a bonded length in a second portion of the conductor;
Figure 9 illustrates a perspective view of a half-twist provided at a non-bonded portion of conductor;
Figures 10A, 10B, and 10C illustrate a sequence of steps to rotate the set of petals of the folded conductor shown in Figure 7A to form the stator core illustrated in Figure 11;
Figure 11 illustrates a cylindrically-shaped conductor formed from the stack of conductors shown in Figures 7A and 7B;
Figure 12 illustrates an axial perspective view of a cylindrically-shaped conductor for a stator;
Figure 13 illustrates a flowchart depicting a method of manufacturing a stator for a slotless electric motor.

In the drawings, like reference signs indicate like elements.

### Description

Herein a method of manufacturing a stator for a slotless motor is described. The stator may be a radial flux stator, but it will be understood that other examples of stator may be used. In short, a conductor comprising wires is provided which will form the basis of the stator. Portions of the conductor are bonded to provide a plurality of bonded lengths which act as stator coils in the assembled stator. The conductor is manipulated in a novel and inventive manner to provide a conductor wherein all of the wires have the same circumferential average position and the same radial average position of the wires are all equal to thereby provide a stator.

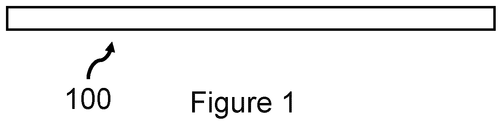

Figure 1A illustrates a plan view of a conductor 100. Figure 1B illustrates a plan view of a portion of the conductor 100.

The conductor 100 comprises a bundle of wires (e.g. a plurality of wires) wherein each wire is disposed parallel to the other wires.

A method of manufacturing a stator for a slotless electric motor comprises a step of disposing a conductor in the shape of an annular cylinder, the annular cylinder having an inner radial face and an outer radial face and first axial face and a second axial face, and wherein the conductor comprises a bundle of wires wherein: each wire is disposed parallel to the other wires and, each wire is disposed a constant distance from the inner radial face.

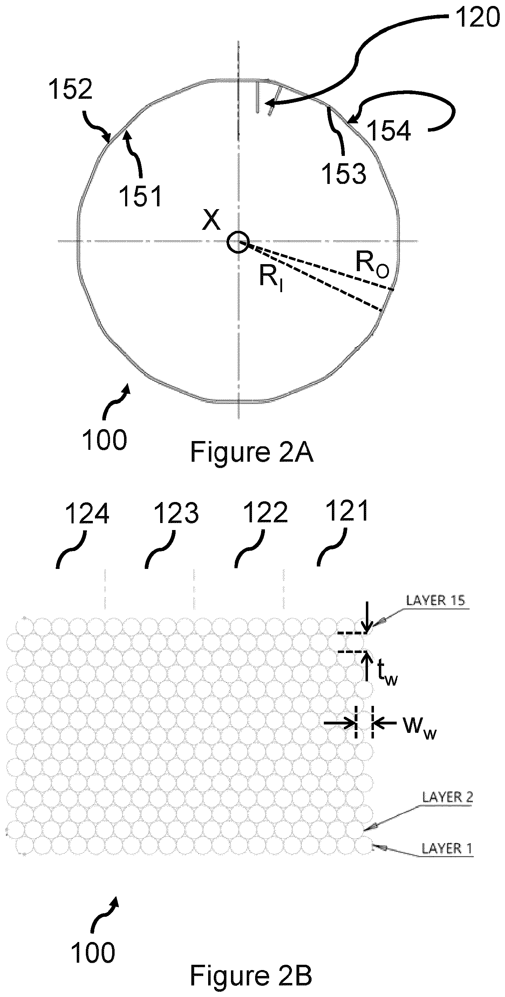

Figures 2A and Figure 2B illustrate the conductor shown in Figure 1 disposed into the shape of an annular cylinder as recited in the above method step.

Figure 2A illustrates an axial plan view of a conductor. Figure 2B illustrates a partial axial plan view of a portion of the conductor of Figure 2A.

The conductor 100 is formed in the shape of an annular cylinder surrounding a central longitudinal axis X i.e. the conductor 100 is wrapped around the central longitudinal axis in a helical manner to thereby give the overall form of an annular cylinder. The conductor 100 comprises a plurality of loops around the central longitudinal axis). In the present example, there are four loops i.e. the conductor makes four complete turns around the central longitudinal axis X. The four loops are: a first loop 121; a second loop 122; a third loop 123; a fourth loop 124. The plurality of loops 121 to 124 are disposed parallel and adjacent to one another. When the conductor 100 is wrapped around the central longitudinal axis the wires forming the conductor have a helical shape i.e. the wires comprise a plurality of turns around the central longitudinal axis. Each wire of the conductor is disposed a constant distance from the first axial face; and, each wire is disposed a constant distance from the inner radial face. The conductor 100 has two ends which provide a connection 120 for connecting the conductor to a source of electromotive force.

As stated above the conductor 100 is disposed in the shape of an annular cylinder. The annular cylinder has: a central longitudinal axis X; an inner radial face 151 having an inner radius R_{I} (i.e. the distance from the central longitudinal axis to the inner radial face 151; an outer radial face 152 having an outer radius R_{O}, a first axial face 153; and, a second axial face 154.

The inner radial face 151 is disposed adjacent to the first axial face 153 and the second axial face 154. The outer radial face 152 is disposed adjacent to the first axial face 153 and the second axial face 154. The first axial face 153 is disposed adjacent to the inner radial face 151 and the outer radial face 152. The second axial face 154 is disposed adjacent to the inner radial face 151 and the outer radial face 152. The first axial face 153 is perpendicular to the inner radial face 151 and the outer radial face 152 and parallel to the second axial face 154. The first axial face 153 and the second axial face 154 are disposed in the direction of the longitudinal axis X. The inner radial face 151 is perpendicular to the first axial face 153 and the second axial face 154. The inner radial face 151 and the outer radial face 152 are disposed perpendicular to the longitudinal axis X.

Although the conductor 100 is continuous, each loop (i.e. complete turn of the conductor around the central longitudinal axis) can be thought of as a discrete integer. A first end of the first loop 121 is configured to connect to a source of electromotive force (EMF). A second end of the first loop 121 is connected to the first end of the second loop 122. A second end of the second loop 122 is connected to the first end of the third loop 123. A second end of the third loop 123 is connected to the first end of the fourth loop 124. A second end of the fourth loop 124 is configured to connect to a source of EMF.

In more detail and as can be seen in Fig. 2B: the first loop 121 is disposed parallel and adjacent to the second loop 122; the second loop 122 is disposed parallel to and between the first loop 121 and the third loop 123; the third loop 123 is disposed parallel to and between the second loop 122 and the fourth loop 124; the fourth loop 124 is disposed parallel to and adjacent to the third loop 123. The connection 120 comprises the first end of the first loop and the second end of the fourth loop.

Circulating currents may be provided around the stator to reduce voltage and/or current asymmetries between any of the loops 121 to 124.

In the present example the conductor 100 comprises fifteen layers of wires. Therefore, the conductor has a thickness of 15t_{w} where t_{w} is the thickness of one wire. Accordingly, each of the loops has a thickness of 15t_{w}. Each layer has a width of five wires. Therefore, the conductor has a width of 5w_{w} where w_{w} is the width of one wire. It follows that each loop has a thickness 15t_{w} and a width 5w_{w}.

In the example described herein, each wire has a circular cross-section (e.g. each wire is a cylindrical tube) and each wire has the same diameter and the thickness and width are equal to the diameter of the circular cross-section; t_{w} = w_{w}.

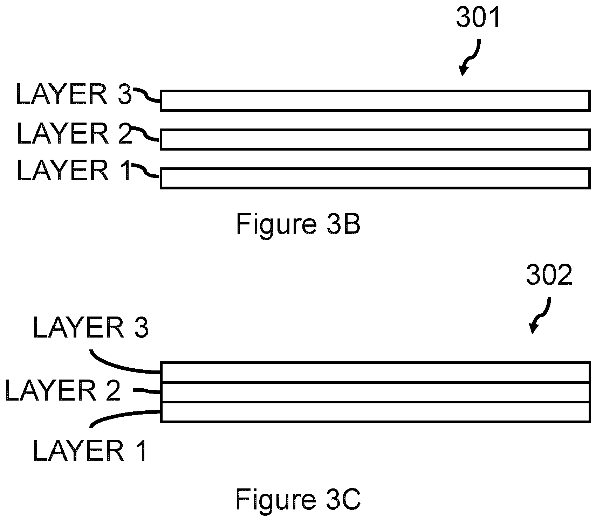

The first layer of wires in the conductor (LAYER 1 in Figure 2B) is disposed at the inner radial face 151 i.e. the first layer is disposed at a separation of zero from the inner radial face. The second layer (LAYER 2 in Figure 2B) is separated from the inner radial face 151 by one layer (i.e. the first layer i.e. LAYER 1). In other words, the second layer is disposed at a distance equal to the thickness of one wire, t_{w}, from the inner radial face 151. Similarly, the third layer (LAYER 3 in Figures 3B to 3C) is disposed at a distance of 2t_{w} from the inner radial surface 151 and so on. The fifteenth layer (LAYER 15 in Figure 2B) is separated from the inner radial face 151 by fourteen layers of wire. In other words, the fifteen layer is disposed at a distance equal to the thickness of fourteen wires, 14t_{w}, from the inner radial face 151. The fifteenth layer is disposed at the outer radial face 152 i.e. the fifteenth layer is disposed at a separation of zero from the outer radial face 152. Each of the loops 121 to 124 spans from the inner radial face 151 to the outer radial face 152. A face of the first loop 121 is disposed at the first axial face 153 i.e. the loop 121 forms the first axial face 153. A face of the fourth loop 124 is disposed at the second axial face 154 i.e. loop124 forms the second axial face 154.

A method of manufacturing a stator for a slotless electric motor comprises a step of bonding a plurality of bonded lengths on the conductor wherein the bonded lengths comprise regions of the conductor wherein adjacent wires are bonded along the bonded lengths and wherein the average spacing between adjacent wires is smaller in the bonded lengths than in non-bonded lengths, wherein the plurality of bonded lengths are separated by non-bonded lengths.

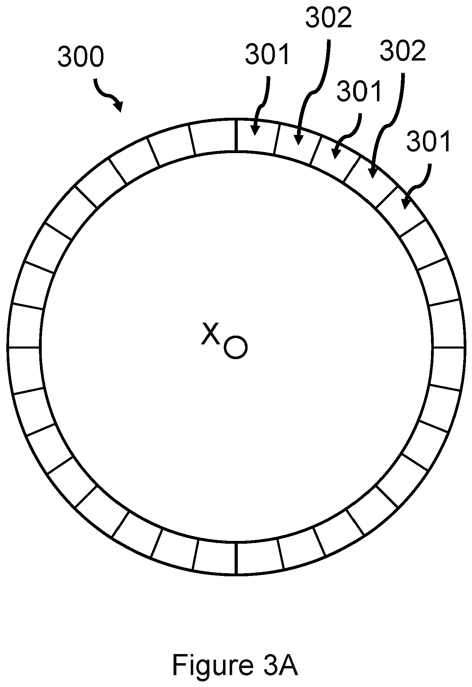

Figure 3A illustrate the conductor shown in Figures 2A and 2B with a plurality of bonded lengths and a plurality of non-bonded lengths as recited in the above method step.

Figure 3A illustrates an axial plan view of a plan of the conductor of Figures 2A and 2B comprising a plurality of bonded and non-bonded lengths; Figure 3B illustrates an axial plan view of layers of the conductor in a non-bonded length; Figure 3C illustrates an axial plan view of layers of the conductor in a bonded length.

The cylindrical conductor 100 comprises a plurality of non-bonded lengths 301 and a plurality of bonded lengths 302. The average spacing between wires in adjacent layers is smaller in the bonded lengths 302 than in non-bonded lengths 301. In other words, the bonded lengths 302 have a greater density than the non-bonded lengths 301. The conductor density of the bonded lengths 302 is greater than the conductor density of the non-bonded lengths 301. In examples wherein the conductor is formed of copper, the bonded lengths 301 have a greater copper fill than the non-bonded lengths.

The non-bonded lengths 301 may have a shorter length than the bonded lengths 302.

The bonded lengths 302 are provided by applying a bonding compound to lengths of the conductor 100 and compressing the length where the bonding compound is applied until the bonding compound sets.

In examples, the bonding compound is an adhesive such as a resin, for example a heat-activated resin or a light-activated resin (e.g. a UV-activated resin). In examples wherein a heat-activated resin is provided heat may be provided by a clamping apparatus for compressing the length where the adhesive is applied and heat may be provided by any of: passing a current through the conductor to thereby heat the length of the conductor where the adhesive is applied (e.g. Joule heating); heating the clamping apparatus to thereby heat the length of the conductor where the adhesive is applied; and, irradiating the length of the conductor where the adhesive is applied with infrared light.

A method of manufacturing a stator for a slotless electric motor comprises a step of folding the conductor to provide a plurality of petals repeated along the conductor, wherein each petal comprises a pair of bonded lengths connected by a non-bonded length, wherein the pair of bonded lengths are disposed parallel to each other, and wherein: adjacent petals on the conductor are connected by a non-bonded length; and, the non-bonded lengths in the petals are bounded by a circumference of a first circle, wherein the first circle has a first diameter, the non-bonded lengths which connect the petals are bounded by a circumference of a second circle, wherein the second circle has a second diameter, wherein the second diameter is less than the first diameter, and wherein the first circle and second circle are coplanar and concentric.

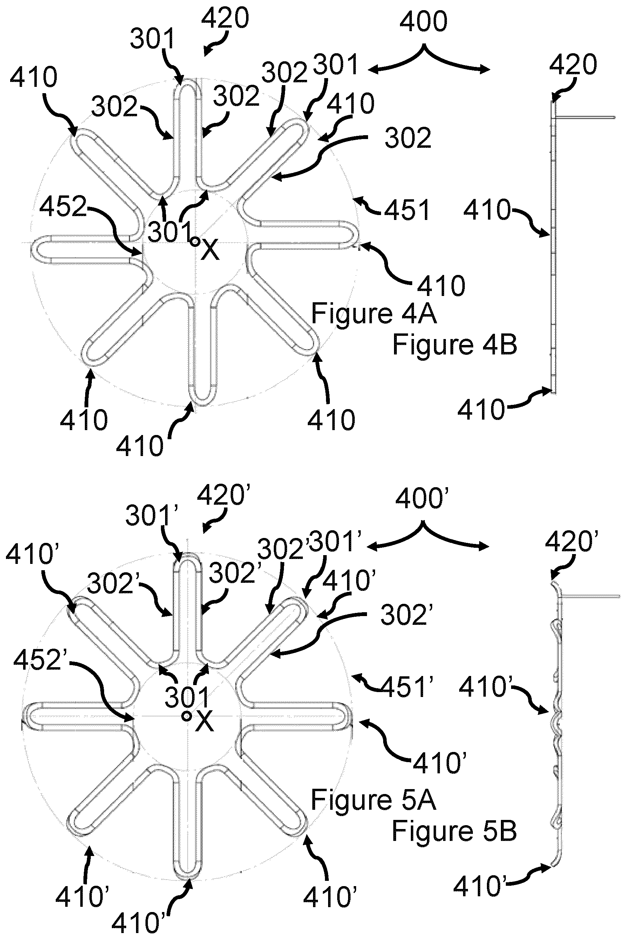

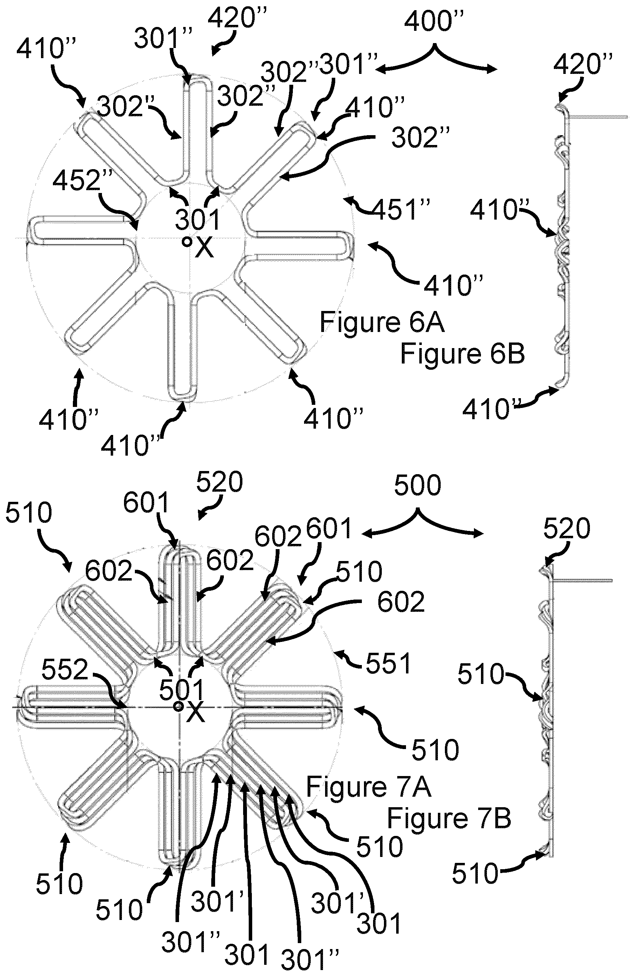

Figures 4A and 4B illustrate the conductor (i.e. the first conductor) shown in Figures 3A, 3B, and 3C folded to provide a plurality of petals as recited in the above method step. Figures 5A and 5B illustrate another conductor (i.e. a second conductor) similar to the first conductor shown in Figures 3A, 3B, and 3C folded to provide a plurality of petals as recited in the above method step. Figures 6A and 6B illustrate another conductor (i.e. a third conductor) similar to the first conductor shown in Figures 3A, 3B, and 3C folded to provide a plurality of petals as recited in the above method step.

Figure 4A illustrates an axial perspective view of a folded conductor 400 comprising a plurality of petals 410 and connection petal 420; Figure 4B illustrates a radial perspective view of the folded conductor 400 shown in Figure 4A. Figure 5A illustrates an axial perspective view of a folded conductor 400' comprising a plurality of petals 410' and connection petal 420'; Figure 5B illustrates a radial perspective view of the folded conductor 400' shown in Figure 5A. Figure 6A illustrates an axial perspective view of a folded conductor 400" comprising a plurality of petals 410" and connection petal 420"; Figure 4B illustrates a radial perspective view of the folded conductor 400" shown in Figure 4A. Neighbouring petals form a 45 degree angle with the central longitudinal axis (i.e. ∠ petal-axis-petal = 45 °)

Each petal 410 comprises a pair of bonded lengths 302 connected by a non-bonded length 301. The pair of bonded lengths in a petal 410 are disposed parallel to each other. Adjacent petals 410 of the conductor are connected by a non-bonded length 301.

The connection petal 420 is similar to the petals 410 but additionally comprises the connection 120.

The non-bonded lengths 301 in the petals 410 and 420 are bounded by a circumference of a first circle 451, wherein the first circle 451 has a first diameter i.e. the non-bonded lengths 301 in the petals are disposed outside of the circumference of the first circle 451.

The non-bonded lengths which connect adjacent petals are bounded by a circumference of a second circle 452, wherein the second circle 452 has a second diameter, wherein the second diameter is less than the first diameter i.e. the non-bonded lengths which connect the petals are disposed within the circumference of the second circle 452.

The first circle 452 and second circle 452 are coplanar and concentric. The first circle 451 and the second circle 452 are disposed in the same plane, referred to herein as the circle plane. The first circle 451 and the second circle 452 are centred on the central longitudinal axis X of the conductor 100.

The second folded conductor shown in Figures 5A and 5B has the same features as the first folded conductor which are denoted using the same reference signs each with the addition of a single prime symbol i.e. the second folded conductor has a plurality of petals 410' and a connection petal 420' et cetera. In a similar fashion the third folded conductor has the same features as the first folded conductor which are denoted using the same reference signs each with the addition of a double prime symbol i.e. the third folded conductor has a plurality of petals 410" and a connection petal 420" et cetera.

The first circle 451 and the second circle 452 of the first conductor 400 are identical to the first circle 451' and the second circle 452' of the second conductor 400'. The first circle 451 and the second circle 452 of the first conductor 400 are identical to the first circle 451" and the second circle 452" of the third conductor 400".

Figure 7A illustrates an axial perspective view of the first folded conductor 400, the second folded conductor 400', and the third folded conductor 400" axially stacked one atop the other to provide a folded conductor stack 500; Figure 7B illustrates a radial perspective view of the folded conductor stack 500 shown in Figure 7A.

Once the first conductor 400', the second conductor 400' and the third conductor 400" are folded to provide the petals in the manner described herein, the three conductors are then stacked one atop the other i.e. an axial face of the first conductor 400 is abutted with an axial face of the second conductor 400' and another axial face of the second conductor 400' is abutted with an axial face of the third conductor. The central longitudinal axes of the first, second, and third conductors are aligned and coincident.

The method of forming the stator may comprising axially stacking a plurality of folded conductors 500 (e.g. preferably three) one atop the other.

Hereinafter: a set of petals comprising a petal from the first folded conductor 400, a petal from the second folded conductor 400', a petal from the third folded conductor 400" is referred to as a set of petals 510. Each set of petals 510 comprises two sets of bonded lengths 602 and a set of non-bonded lengths 601. Each set of petals 510 is connected by a set of non-bonded lengths. The set of petals comprising the connection petals of the first, second and third conductors is referred to as a set of connection petals 520. Each set of non-bonded lengths 601 in each set of petals 510 is disposed on the first circle 551 (the first circle 551 is identical to the first circles 451, 451' and 451"). Each set of non-bonded lengths 601 connecting each set of petals 510 is disposed on the second circle 552 (the second circle 552 is identical to the second circles 452, 452' and 452").

The first, second and third conductors are folded so that the bonded lengths in each petal are offset relative to each other. The result of the offset is that the bonded lengths of the conductors are interleaved when axially stacked. This interleaving can be seen in Figure 7A. A given set of petals, when moving in a clockwise direction about the central longitudinal axis X, has bonded lengths in the order: bonded length 301 from first folded conductor 400; bonded length 301' from second folded conductor 400'; bonded length 301" from third folded conductor 400"; bonded length 301 from first folded conductor 400; bonded length 301' from second folded conductor 400'; bonded length 301" from third folded conductor 400".

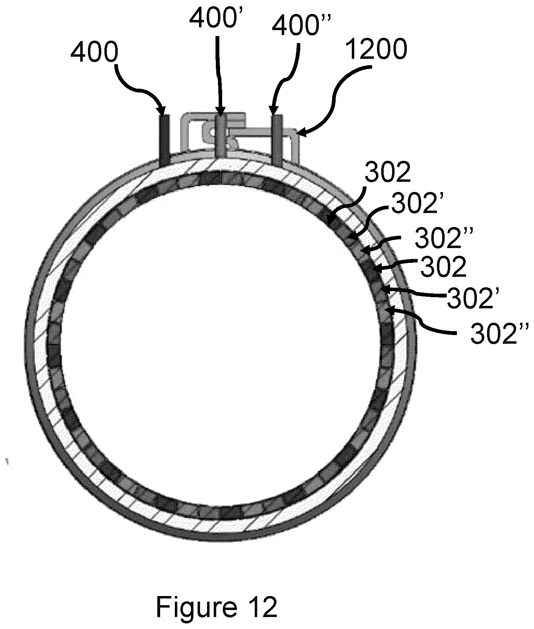

Figure 12 illustrates an axial perspective view of a cylindrically-shaped conductor for a stator. When the stack of folded conductors 500 is formed into a cylindrically-shaped conductor for a stator, the bonded lengths of the various folded conductors remain interleaved as shown.

For each conductor one of the non-bonded lengths may comprise a half-twist. In examples, more than one of the non-bonded lengths may comprises a half-twist e.g. all of the non-bonded lengths may comprise a half-twist or every other one of the non-bonded lengths may comprise a half-twist.

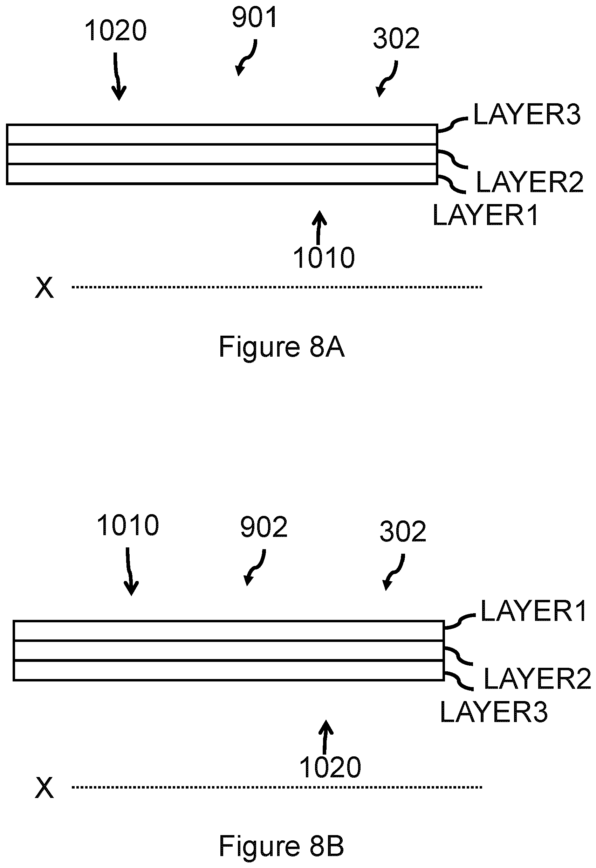

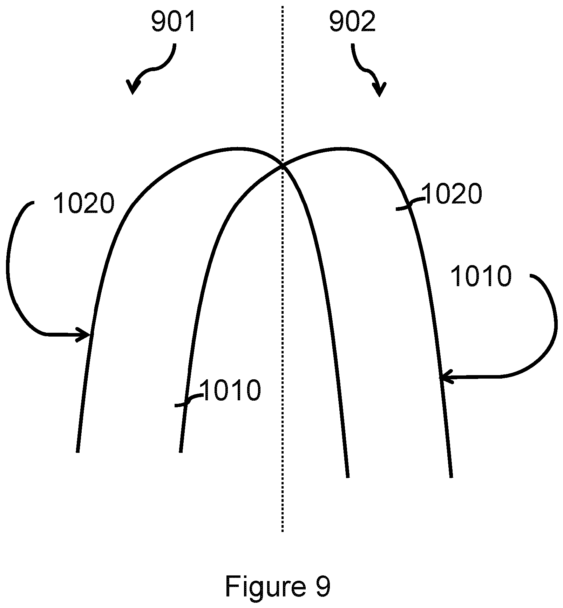

Figure 8A illustrates a bonded length 302 of the conductor 100 in the first portion of the conductor 100 and Figure 8B a bonded length 302 of the conductor 100 in the second portion of the conductor 100. Figure 9 illustrates a perspective view of a half-twist provided at a non-bonded portion of the conductor. In examples, the half-twist shown in Figure 9 may be provided at a first or second axial end of a cylindrically-shaped conductor.

Providing the half-twist provides a first portion 901 of the conductor on a first side of the half-twist and a second portion 902 of the conductor on a second side of the half-twist. The conductor has two faces, namely a first face 1010 and a second face 1020. The two faces define opposing sides of the conductor. In the first portion 901 of the conductor the first face 1010 of the conductor faces toward a given direction (e.g. in the direction of the perspective view in Figure 9) and the second face 1020 of the conductor faces away from the given direction (e.g. away from the direction of the perspective view in Figure 9). In the second portion 902 of the conductor the second face 1020 of the conductor faces toward a given direction (e.g. in the direction of the perspective view in Figure 9) and the first face 1010 of the conductor faces away from the given direction (e.g. away from the direction of the perspective view in Figure 9).

A given loop may form the first face and another loop may form the second face. Therefore, the half-twist changes which loop faces in (e.g. which loop is closest to) a given direction. When a cylindrically-shaped conductor is formed with the conductor comprising a half-twist, the first face 1010 faces the central longitudinal axis for a first portion 901 of the conductor and a second face 1020 faces the central longitudinal axis for a second portion 902 of the conductor.

The bonded length 302 in Figure 8A is representative of all of the bonded lengths 302 in the first portion 901 of the first conductor 100. The bonded length 302 in Figure 8B is representative of all of the bonded lengths 302 in the second portion 902 of the conductor 100.

In the first portion 901 bonded lengths 302 are arranged so that: the first layer LAYER1 is disposed closer to the central longitudinal axis X than the second layer LAYER2, third layer LAYER3 and so on up to the fifteenth layer.

In the second portion 902 of the bonded lengths 302 are arranged so that: the fifteenth layer (not shown) is the closest layer to the central longitudinal axis, next the fourteenth layer (not shown) and so on. The third layer LAYER 3 is disposed closer to the central longitudinal axis X than the second layer LAYER 2, and first layer LAYER 1; the second layer LAYER 2 is disposed closer to the central longitudinal axis X than the first layer LAYER 1.

When a current is flowed through the conductor in use, loops closer to the central longitudinal axis X heat up to greater temperatures in comparison to the loops which are further from the central longitudinal axis X. Providing the half-twist changes the order in which the loops in the conductor are disposed relative to the central longitudinal axis and therefore may regulate the temperature of the conductor and avoid damage caused by said heat.

Preferably the half-twist is disposed at a midpoint of the conductor i.e. at a point of the conductor equidistant between electrical connection terminals of the conductor. Advantageously, providing the half-twist at a midpoint of the conductor may result in equal amounts of heating of loops in the first region 901 on the first side of the half-twist and the second region 902 on the second side of the half-twist, and therefore, wear incurred by heating the conductor is evenly distributed over the first region 901 and the second region 902. It will be appreciated that the above description of the half-twist respect to Figures 8A, 8B and 9 can be generalised to any number of wires (or layers of wires) which form the conductor.

It will be appreciated that the half-twist described above is applied to the first folded conductor 400, the second folded conductor 400', and the third folded conductor 400".

A method of manufacturing a stator for a slotless electric motor comprises a step of rotating each petal about a point on the second circle to align in parallel the bonded lengths of all of the petals to thereby provide a stator comprising a cylindrically-shaped conductor having a diameter equal to the second diameter and wherein the bonded lengths are equidistantly disposed around and from a central longitudinal axis of the cylindrically-shaped conductor.

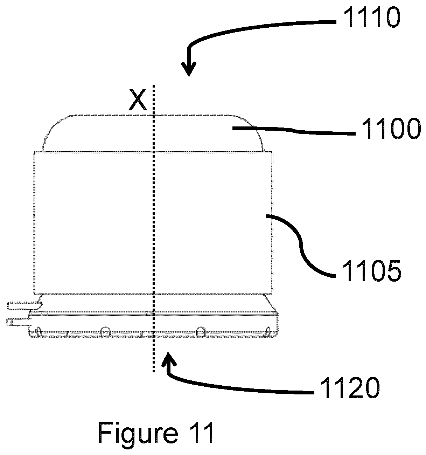

Figure 11 illustrates a cylindrically-shaped conductor formed from the stack of conductors 500 shown in Figures 7A and 7B after implementing the above recited method step.

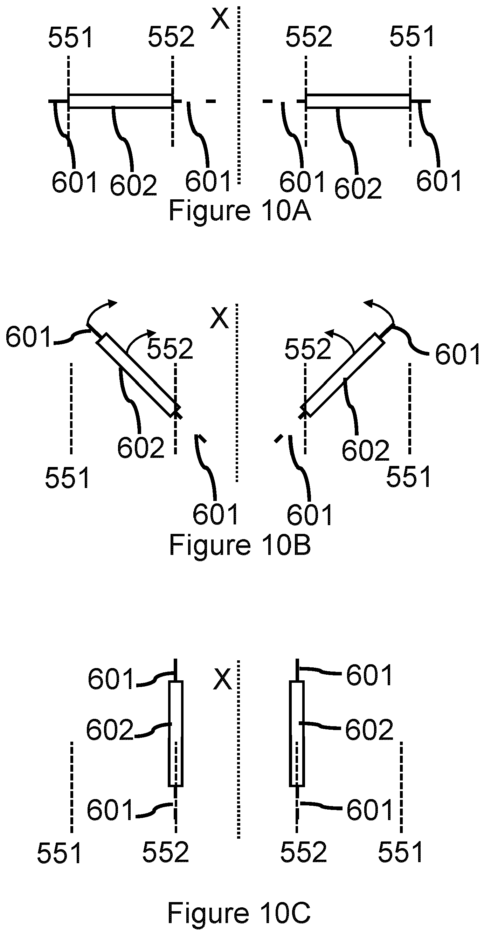

Figures 10A, 10B, and 10C illustrate a sequence of steps to rotate the set of petals 510 of the folded conductor shown in Figure 7A to form the stator core illustrated in Figure 11; Figure 11 illustrates a radial perspective view of a cylindrically-shaped conductor 1100 formed from the stack of conductor 500 shown in Figures 7A and 7B.

All of the petals (i.e. all of the petals in the sets of petals) 610 620 are rotated around about a point on the second circle 552, that is, the point on the second circle 552 which is the closest to a given set of petal 610 620. The end of each petal 410 420 410' 420' 410" 420" (in a set of petals 610 620) which is closest to the first circle 551 is rotated toward the central longitudinal axis X.

As shown in Figure 10B, all of the petals in a set of petals 610 620 are rotated in the same direction i.e. each of the first ends of the petals are rotated on a particular side of the plane containing the first circle 551 and second circle 552 (e.g. all of the first ends are rotated over a 'top' side of the plane).

As shown in Figure 10C, each petal in a set of petals 610 620 is rotated through 90° so that the length of each bonded length 302 302' 302" in each petal is perpendicular to the plane containing the first circle 551 and the second circle 552.

All of the bonded lengths 302 302' 302" of the set of conductors 500 are disposed on the second circle 552.

The method may also comprise a step of bending a first axial end of the cylindrically-shaped conductor to toward the longitudinal axis.

Figure 11 illustrates a cylindrically-shaped conductor 1100 formed from the set of conductors 500. The cylindrically-shaped conductor 1100 has a first axial end 1110 and a second axial end 1120. A flux ring 1105 is disposed around the cylindrically-shaped conductor 1100.

The conductors 400 400' 400" which form the cylindrically-shaped conductor 1100 are connected to a source of emf via respective connections 120 120' 120" (see Figures 4A, 4B, 5A, 5B, 6A and 6B). The connections are connected to a source of emf via a star connection.

The non-bonded lengths on the first axial end 1110 are bent towards the central longitudinal axis X to thereby reduce the mean distance of all points on the non-bonded lengths from the longitudinal axis X. Advantageously, this reduces the mean distance of all points on the non-bonded lengths from the first axial side 1110 concentrates the magnetic field (e.g. the field lines are comparatively more closely spaced to the central longitudinal axis) when current flows through the conductor, thereby comparatively increasing the power transfer between the stator and a rotor disposed around the cylindrical-shaped conductor (i.e. operated as a stator) in use. Advantageously, power losses (I²R) are reduced which may lead to a lower temperature rise in the conductor when a current is flowed therethrough. Reducing the temperature rise in the conductor permits a greater torque to be applied to the motor (and higher motor speeds obtained).

The cylindrically-shaped conductor 1100 is operable as a three phase stator for a motor. The first conductor 400 is configured to carry a first phase. The second conductor 400' is configured to carry a second phase (e.g. an AC current with a phase lag of 120 degrees relative to the AC current applied to the first conductor). The third conductor 400" is configured to carry a third phase (e.g. an AC current with a phase lag of 240 degrees relative to the AC current applied to the first conductor).

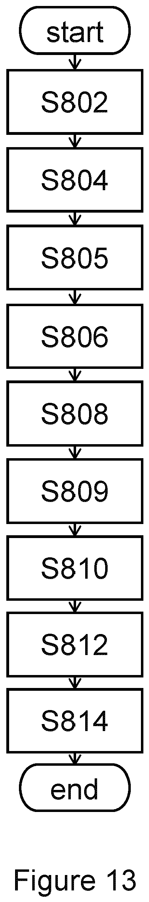

Figure 13 illustrates a flowchart depicting a method of manufacturing a stator for a slotless electric motor.

The method of manufacturing a stator for a slotless electric motor the method comprising:
Disposing, S802, a conductor in the shape of an annular cylinder, the annular cylinder having an inner radial face and an outer radial face and first axial face and a second axial face, and wherein the conductor comprises a bundle of wires wherein: each wire is disposed parallel to the other wires and, each wire is disposed a constant distance from the inner radial face;

In other words, a conductor comprising a plurality of loops is disposed into an annular shape as illustrated in Figures 2A and 2B and as described above.

Bonding, S804, a plurality of bonded lengths on the conductor wherein the bonded lengths comprise regions of the conductor wherein adjacent wires (i.e. adjacent layers of wires) are bonded along the bonded lengths and wherein the average spacing between adjacent wires is smaller in the bonded lengths than in non-bonded lengths, wherein the plurality of bonded lengths are separated by non-bonded lengths.

In other words, portions of the conductor are bonded to thereby provide a conductor as illustrated in Figures 3A to 3C and as described above.

The step of bonding a plurality of bonded lengths on the conductor comprises: applying a bonding compound to lengths of the conductor; and, activating the bonding compound to thereby form a plurality of bonded lengths.

As described herein the bonding compound may be an adhesive such as a resin. For example, the bounding compound may be a resin such as a heat-activated resin. The requisite heat may be supplied by at least one of: heating with a clamping member; Joule heating of the conductor; irradiation with infrared light.

The step of bonding a plurality of bonded lengths may also comprise applying a clamping force (e.g. by a clamping member) the length of the conductor where the bonding compound (e.g. resin) is applied to thereby reduce the average spacing between the wires of the conductor at the length of the conductor where the bonding compound is applied. When the bonding compound is activated and sets then the clamping force can be removed.

Optionally, applying, S805, a half-twist to one of the non-bonded lengths of the conductor at a first point on the conductor so that a cross-section of the wire at the first point of the conductor is a mirror-image of a cross-section of the wire at a second point of the conductor, such that, a wire on the inner radial face at the first point is on the outer radial face at the second point.

A half-twist and its purpose are described in more detail above.

Folding, S806, the conductor to provide a plurality of petals repeated along the conductor, wherein each petal comprises a pair of bonded lengths connected by a non-bonded length, wherein the pair of bonded lengths are disposed parallel to each other, and wherein: adjacent petals on the conductor are connected by a non-bonded length; and, the non-bonded lengths in the petals are bounded by a circumference of a first circle, wherein the first circle has a first diameter; the non-bonded lengths which connect the petals are bounded by a circumference of a second circle, wherein the second circle has a second diameter, wherein the second diameter is less than the first diameter, and wherein the first circle and second circle are coplanar and concentric.

In other words, petals are provided in the conductor to provide a conductor as illustrated in Figure 4B and as described above.

Optionally repeating steps S802 to S806 to provide a plurality of folded conductors and axially stacking the plurality of folded conductors.

Rotating, S808, each petal about a point on the second circle to align in parallel the bonded lengths of all of the petals to thereby provide a stator comprising a cylindrically-shaped conductor having a diameter equal to the second diameter and wherein the bonded lengths are equidistantly disposed around and from a central longitudinal axis of the cylindrically-shaped conductor.

In other words, each petal is rotated in the manner illustrated in the sequence of Figures 10A to 10C to provide a cylindrically shaped conductor as illustrated in Figure 11.

Bending, S809, a first axial end of the cylindrically-shaped conductor to toward the longitudinal axis.

Disposing, S810, the cylindrically-shaped conductor within a central hole of a flux ring having an inner diameter which is greater than the second diameter to thereby provide a stator comprising a cylindrically-shaped conductor with a flux ring disposed around an outer radial surface of the conductor.

In examples, the flux ring has an axial length which is less than or equal to the length of the bonded lengths of the conductor. Disadvantageously, in examples wherein the flux ring is longer than the bonded lengths the wires may become lose (e.g. the average spacing of the wires in the bonded lengths might increase).

Disposing, S812, an expandable mandrel in the centre of the cylindrically-shaped conductor; and, expanding, the expandable mandrel when the cylindrically-shaped conductor is disposed within the central hole of the flux ring to thereby increase the diameter of the cylindrically-shaped conductor to a diameter between the second diameter and the inner diameter of the flux ring.

Advantageously, the radial distance between the cylindrically-shaped conductor and the flux distance is minimised.

Bending, S814, a second axial end of cylindrically-shaped conductor away from the longitudinal axis.

The non-bonded lengths 301 at the second axial end 302 flare out to thereby reduce the mean axial distance between the non-bonded lengths and the flux ring.

Further embodiments are envisaged. It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

To perform the step of disposing a conductor in the shape of an annular cylinder, the annular cylinder having an inner radial face and an outer radial face and first axial face and a second axial face, and wherein the conductor comprises a bundle of wires wherein: each wire is disposed parallel to the other wires and, each wire is disposed a constant distance from the inner radial face, an alternative to winding the conductor in the manner of a helix around a central longitudinal axis is to instead wind the conductor in the manner of a spiral around the central longitudinal axis to thereby form the conductor into a cylindrical shape. In such examples, each wire is disposed at a constant distance from an axial face of the cylindrical shape.

## Claims

1. A method of manufacturing a stator for a slotless electric motor, the method comprising:
disposing a conductor (100) in the shape of an annular cylinder;
bonding a plurality of bonded lengths (302) of the conductor (100) wherein the bonded lengths (302) comprise regions of the conductor (100) wherein adjacent wires are bonded along the bonded lengths (302) and wherein the average spacing between adjacent wires is smaller in the bonded lengths (302) than in non-bonded lengths (301), wherein the plurality of bonded lengths (302) are separated by non-bonded lengths (301);
folding the conductor (100) to provide a plurality of petals (410, 420) repeated along the conductor (100), wherein each petal (410, 420) comprises a pair of bonded lengths (302) connected by a non-bonded length (301), wherein the pair of bonded lengths (302) are disposed parallel to each other, and wherein:
adjacent petals (410, 420) on the conductor (100) are connected by a non-bonded length (301); and,
the non-bonded lengths (301) in the petals (410, 420) are bounded by a circumference of a first circle (451), wherein the first circle (451) has a first diameter;
the non-bonded lengths (301) which connect the petals (410, 420) are bounded by a circumference of a second circle (452), wherein the second circle (452) has a second diameter, wherein the second diameter is less than the first diameter, and wherein the first circle (451) and second circle (452) are coplanar and concentric;
rotating each petal (410, 420) about a point on the second circle (452) to align in parallel the bonded lengths (302) of all of the petals (410, 420) to thereby provide the stator comprising a cylindrically-shaped conductor (100) having a diameter equal to the second diameter and wherein the bonded lengths (302) are equidistantly disposed around and from a central longitudinal axis (X) of the cylindrically-shaped conductor (100).

2. The method of claim 1, wherein:
the step of bonding a plurality of bonded lengths (302) on the conductor (100) comprises:
applying a bonding compound to lengths of the conductor (100) to thereby form a plurality of bonded lengths (302).

3. The method of claim 2, wherein:
the step of bonding a plurality of bonded lengths (302) on the conductor (100) further comprises activating the bonding compound.

4. The method of any of the preceding claims, comprising:
applying a half-twist to one of the non-bonded lengths (301) of the conductor (100) at a first point on the conductor (100) so that a cross-section of the wire at the first point of the conductor (100) is a mirror-image of a cross-section of the wire at a second point of the conductor (100), such that, a wire on the inner radial face (151) at the first point is on the outer radial face at the second point.

5. The method of any of the preceding claims, comprising:
disposing the cylindrically-shaped conductor (100) within a central hole of a flux ring (1105) having an inner diameter which is greater than the second diameter to thereby provide a stator comprising a cylindrically-shaped conductor (100) with a flux ring (1105) disposed around an outer radial surface of the conductor (100).

6. The method of claim 5, wherein:
the flux ring (1105) has an axial length which is at least the length of the bonded lengths (302) of the conductor (100).

7. The method of any of the preceding claims, the method comprising:
disposing an expandable mandrel in the centre of the cylindrically-shaped conductor (100); and,
expanding the expandable mandrel when the cylindrically-shaped conductor (100) is disposed within the central hole of the flux ring (1105) to thereby increase the diameter of the cylindrically-shaped conductor (100) to a diameter between the second diameter and the inner diameter of the flux ring.

8. The method of any of the preceding claims, comprising;
bending a first axial end of the cylindrically-shaped conductor (100) to toward the longitudinal axis (X).

9. The method of any of the preceding claims, comprising;
bending a second axial end of cylindrically-shaped conductor (100) away from the longitudinal axis (X).

10. A method of manufacturing a slotless electric motor, the method comprising:
performing the method of any of claims 1 to 9 to provide a stator;
providing a rotor configured to rotate around an axial centre of the stator.

## Patentansprüche

1. Verfahren zur Herstellung eines Stators für einen schlitzlosen Elektromotor, wobei das Verfahren Folgendes umfasst:
Anordnen eines Leiters (100) in der Form eines ringförmigen Zylinders;
Verbinden einer Vielzahl von verbundenen Längen (302) des Leiters (100), wobei die verbundenen Längen (302) Bereiche des Leiters (100) umfassen, in denen benachbarte Drähte entlang der verbundenen Längen (302) miteinander verbunden sind, und wobei die durchschnittliche Beabstandung zwischen angrenzenden Drähten in den verbundenen Längen (302) kleiner ist als in nicht verbundenen Längen (301), wobei die Vielzahl von verbundenen Längen (302) durch nicht verbundene Längen (301) voneinander getrennt ist;
Falten des Leiters (100), um eine Vielzahl von wiederholten Blütenblättern (410, 420) entlang des Leiters (100) bereitzustellen, wobei jedes Blütenblatt (410, 420) ein Paar verbundener Längen (302) umfasst, die durch eine nicht verbundene Länge (301) verbunden sind, wobei das Paar verbundener Längen (302) parallel zueinander angeordnet ist, und wobei:
angrenzende Blütenblätter (410, 420) an dem Leiter (100) durch eine nicht verbundene Länge (301) miteinander verbunden sind; und
die nicht verbundenen Längen (301) in den Blütenblättern (410, 420) durch einen Umfang eines ersten Kreises (451) begrenzt sind, wobei der erste Kreis (451) einen ersten Durchmesser aufweist;
die nicht verbundenen Längen (301), die die Blütenblätter (410, 420) miteinander verbinden, durch einen Umfang eines zweiten Kreises (452) begrenzt sind, wobei der zweite Kreis (452) einen zweiten Durchmesser aufweist, wobei der zweite Durchmesser kleiner als der erste Durchmesser ist und wobei der erste Kreis (451) und der zweite Kreis (452) koplanar und konzentrisch sind;
Drehen jedes Blütenblatts (410, 420) um einen Punkt auf dem zweiten Kreis (452), um die verbundenen Längen (302) aller Blütenblätter (410, 420) parallel auszurichten und dadurch den Stator bereitzustellen, der einen zylindrisch geformten Leiter (100) umfasst, der einen Durchmesser gleich dem zweiten Durchmesser aufweist, und wobei die verbundenen Längen (302) gleichmäßig um eine zentrale Längsachse (X) des zylindrisch geformten Leiters (100) angeordnet und in gleichem Abstand von diesem beabstandet sind.

2. Verfahren nach Anspruch 1, wobei:
der Schritt des Verbindens eine Vielzahl verbundener Längen (302) auf dem Leiter (100) Folgendes umfasst:
Auftragen einer Verbindungszusammensetzung auf Längen des Leiters (100), um dadurch eine Vielzahl verbundener Längen (302) zu bilden.

3. Verfahren nach Anspruch 2, wobei:
der Schritt des Verbindens einer Vielzahl verbundener Längen (302) auf dem Leiter (100) das Aktivieren der Verbindungszusammensetzung umfasst.

4. Verfahren nach einem der vorstehenden Ansprüche, das Folgendes umfasst:
Anwenden einer Halbverdrehung auf eine der nicht verbundenen Längen (301) des Leiters (100) an einem ersten Punkt auf dem Leiter (100), sodass ein Querschnitt des Drahtes an dem ersten Punkt des Leiters (100) ein Spiegelbild eines Querschnitts des Drahtes an einem zweiten Punkt des Leiters (100) ist, sodass sich ein Draht an der inneren radialen Fläche (151) an dem ersten Punkt auf der äußeren radialen Fläche an dem zweiten Punkt befindet.

5. Verfahren nach einem der vorstehenden Ansprüche, das Folgendes umfasst:
Anordnen des zylindrisch geformten Leiters (100) innerhalb eines zentralen Lochs eines Flussmittelrings (1105), der einen Innendurchmesser aufweist, der größer als der zweite Durchmesser ist, um dadurch einen Stator bereitzustellen, der einen zylindrisch geformten Leiter (100) mit einem Flussmittelring (1105) umfasst, der um eine äußere radiale Oberfläche des Leiters (100) angeordnet ist.

6. Verfahren nach Anspruch 5, wobei:
der Flussmittelring (1105) eine axiale Länge aufweist, die mindestens die Länge der verbundenen Längen (302) des Leiters (100) beträgt.

7. Verfahren nach einem der vorstehenden Ansprüche, wobei das Verfahren Folgendes umfasst:
Anordnen eines expandierbaren Dorns in der Mitte des zylindrisch geformten Leiters (100); und
Expandieren des expandierbaren Dorns, wenn der zylindrisch geformten Leiter (100) innerhalb des zentralen Lochs des Flussmittelrings (1105) angeordnet ist, um dadurch den Durchmesser des zylindrisch geformten Leiters (100) auf einen Durchmesser zwischen dem zweiten Durchmesser und dem Innendurchmesser des Flussmittelrings zu erhöhen.

8. Verfahren nach einem der vorstehenden Ansprüche, das Folgendes umfasst:
Biegen eines ersten axialen Endes des zylindrisch geformten Leiters (100) in Richtung der Längsachse (X).

9. Verfahren nach einem der vorstehenden Ansprüche, das Folgendes umfasst:
Biegen eines zweiten axialen Endes des zylindrisch geformten Leiters (100) von der Längsachse (X) weg.

10. Verfahren zur Herstellung eines schlitzlosen Elektromotors, wobei das Verfahren Folgendes umfasst:
Durchführen des Verfahrens nach einem der Ansprüche 1 bis 9, um einen Stator bereitzustellen;
Bereitstellen eines Rotors, der dazu konfiguriert ist, sich um eine axiale Mitte des Stators zu drehen.

## Revendications

1. Procédé de fabrication d'un stator pour un moteur électrique sans encoche, le procédé comprenant :
disposer un conducteur (100) sous la forme d'un cylindre annulaire ;
assembler par liant une pluralité de longueurs assemblées par liant (302) du conducteur (100), les longueurs assemblées par liant (302) comprenant des régions du conducteur (100) dans lesquelles des fils adjacents sont assemblés par liant le long des longueurs assemblées par liant (302) et l'intervalle moyen entre des fils adjacents étant inférieur dans les longueurs assemblées par liant (302) par comparaison avec des longueurs non assemblées par liant (301), la pluralité de longueurs assemblées par liant (302) étant séparées par des longueurs non assemblées par liant (301) ;
plier le conducteur (100) de façon à former une pluralité de pétales (410, 420) répétés le long du conducteur (100), chaque pétale (410, 420) comprenant une paire de longueurs assemblées par liant (302) reliées par une longueur non assemblée par liant (301), la paire de longueurs assemblées par liant (302) étant disposées parallèlement l'une à l'autre, et :
des pétales adjacents (410, 420) sur le conducteur (100) étant reliés par une longueur non assemblée par liant (301) ; et
les longueurs non assemblées par liant (301) dans les pétales (410, 420) étant délimitées par une circonférence d'un premier cercle (451), le premier cercle (451) présentant un premier diamètre ;
les longueurs non assemblées par liant (301) qui relient les pétales (410, 420) étant délimitées par une circonférence d'un second cercle (452), le second cercle (452) présentant un second diamètre, le second diamètre étant inférieur au premier diamètre, et le premier cercle (451) et le second cercle (452) étant coplanaires et concentriques ;
appliquer une rotation à chaque pétale (410, 420) autour d'un point sur le second cercle (452) afin d'aligner parallèlement les longueurs assemblées par liant (302) de tous les pétales (410, 420) de façon à former ainsi le stator comprenant un conducteur (100) de forme cylindrique présentant un diamètre égal au second diamètre et les longueurs assemblées par liant (302) étant disposées de manière équidistante autour et relativement à un axe longitudinal central (X) du conducteur (100) de forme cylindrique.

2. Procédé selon la revendication 1, dans lequel :
l'étape d'assemblage par liant d'une pluralité de longueurs assemblées par liant (302) sur le conducteur (100) comprend :
appliquer un produit liant à des longueurs du conducteur (100) de façon à former ainsi une pluralité de longueurs assemblées par liant (302).

3. Procédé selon la revendication 2, dans lequel :
l'étape d'assemblage par liant d'une pluralité de longueurs assemblées par liant (302) sur le conducteur (100) comprend, en outre, l'activation du produit liant.

4. Procédé selon l'une quelconque des revendications précédentes, comprenant :
appliquer une rotation d'un demi-tour à l'une des longueurs non assemblées par liant (301) du conducteur (100) au niveau d'un premier point sur le conducteur (100) de telle sorte qu'une section transversale du fil au niveau du premier point du conducteur (100) soit une image spéculaire d'une section transversale du fil au niveau d'un second point du conducteur (100), de telle sorte qu'un fil se trouvant sur la face radiale intérieure (151) au niveau du premier point se trouve sur la face radiale extérieure au niveau du second point.

5. Procédé selon l'une quelconque des revendications précédentes, comprenant :
disposer le conducteur (100) de forme cylindrique à l'intérieur d'un trou central d'un anneau de flux (1105) présentant un diamètre intérieur qui est supérieur au second diamètre de façon à former ainsi un stator comprenant un conducteur (100) de forme cylindrique avec un anneau de flux (1105) disposé autour d'une surface radiale extérieure du conducteur (100).

6. Procédé selon la revendication 5, dans lequel :
l'anneau de flux (1105) présente une longueur axiale qui est au moins égale à la longueur des longueurs assemblées par liant (302) du conducteur (100).

7. Procédé selon l'une quelconque des revendications précédentes, le procédé comprenant :
disposer un mandrin élargissable dans le centre du conducteur (100) de forme cylindrique ; et
élargir le mandrin élargissable lorsque le conducteur (100) de forme cylindrique est disposé à l'intérieur du trou central de l'anneau de flux (1105) de façon à augmenter ainsi le diamètre du conducteur (100) de forme cylindrique jusqu'à un diamètre compris entre le second diamètre et le diamètre intérieur de l'anneau de flux.

8. Procédé selon l'une quelconque des revendications précédentes, comprenant :
courber une première extrémité axiale du conducteur (100) de forme cylindrique en direction de l'axe longitudinal (X).

9. Procédé selon l'une quelconque des revendications précédentes, comprenant :
courber une seconde extrémité axiale du conducteur (100) de forme cylindrique à l'écart de l'axe longitudinal (X).

10. Procédé de fabrication d'un moteur électrique sans encoche, le procédé comprenant :
exécuter le procédé selon l'une quelconque des revendications 1 à 9 afin de former un stator ;
mettre en place un rotor conçu pour tourner autour d'un centre axial du stator.
